# EUROPEAN PATENT APPLICATION

(11) **EP 4 797 786 A1**
(43) Date of publication of application: **26.08.2026**
(21) Application number: 24888022.1
(22) Date of filing: 06.11.2024
(51) Int. Cl.: H04W 28/06

(54) **SENSING DATA FEEDBACK METHOD AND DEVICE**

(30) Priority: 10.11.2023 CN 202311510269
(71) Applicant: HUAWEI TECHNOLOGIES CO., LTD., Shenzhen 518129 (CN)
(72) Inventor: XIE, Junwen, Shenzhen, Guangdong 518129 (CN); MA, Mengyao, Shenzhen, Guangdong 518129 (CN); DU, Yinggang, Shenzhen, Guangdong 518129 (CN)
(74) Representative: Goddar, Heinz J.
(86) International application number: PCT/CN2024/130339
(87) International publication number: WO 2025/098411

(57) **Abstract**

This application relates to the field of communication technologies, and in particular, to a sensing data feedback method and apparatus, to reduce feedback overheads of sensing data. The method includes: A first communication apparatus receives first indication information from a second communication apparatus, where the first indication information indicates an environmental geometric structure in a first sensing region and a scanned region on the environmental geometric structure; compresses, based on the first indication information, a sensing data point corresponding to a sensing geometric structure in the first sensing region, to obtain compressed data, where a compression mode or a compression level of the sensing data point is determined based on at least one of whether the sensing geometric structure matches the environmental geometric structure or whether the sensing data point matches the scanned region on the environmental geometric structure; and sends the compressed data to the second communication apparatus.

## Description

### CROSS-REFERENCE TO RELATED APPLICATIONS

This application claims priority to Chinese Patent Application No. 202311510269.X, filed with the China National Intellectual Property Administration on November 10, 2023 and entitled "SENSING DATA FEEDBACK METHOD AND APPARATUS", which is incorporated herein by reference in its entirety.

### TECHNICAL FIELD

Embodiments of this application relate to the field of communication technologies, and in particular, to a sensing data feedback method and apparatus.

### BACKGROUND

With continuous progress of technologies such as wireless communication, autonomous driving, and artificial intelligence, a large amount of sensing data is generated in communication systems. For example, in an environment reconstruction scenario, terminal devices may scan objects in an environment, obtain sensing data, and upload the sensing data to a network device. The network device may reconstruct a complete environmental map based on the sensing data reported by the terminal devices.

For the large amount of sensing data, how to compress the sensing data to reduce feedback overheads of the sensing data is an issue worthy of attention.

### SUMMARY

This application provides a sensing data feedback method and apparatus, to compress sensing data based on a correlation between the sensing data, so as to reduce feedback overheads of the sensing data.

According to a first aspect, an embodiment of this application provides a sensing data feedback method. The method may be performed by a first communication apparatus. The method includes: receiving first indication information from a second communication apparatus, where the first indication information indicates an environmental geometric structure in a first sensing region and a scanned region on the environmental geometric structure; compressing, based on the first indication information, a sensing data point corresponding to a sensing geometric structure in the first sensing region, to obtain compressed data, where a compression mode or a compression level of the sensing data point is determined based on at least one of whether the sensing geometric structure matches the environmental geometric structure or whether the sensing data point matches the scanned region on the environmental geometric structure; and sending the compressed data to the second communication apparatus.

In the foregoing sensing data feedback method, the first communication apparatus and the second communication apparatus are different communication apparatuses. The first communication apparatus (or the second communication apparatus) may be a terminal device, a component (for example, a processor, a chip, or a chip system) of the terminal device, or an apparatus that is used in combination with the terminal device, or may be a network device, a component (for example, a processor, a chip, or a chip system) of the network device, or an apparatus that is used in combination with the network device.

According to the foregoing method, the first communication apparatus can determine, based on a correlation between the sensing data point corresponding to the sensing geometric structure (for example, a plane or a curved surface) and the environmental geometric structure and the scanned region on the environmental geometric structure that are indicated by the second communication apparatus, the compression mode or the compression level of the sensing data point corresponding to the sensing geometric structure, and support compression of the sensing data points corresponding to different sensing geometric structures at different levels or in different manners, to obtain higher compression efficiency. When ensuring feedback performance of the sensing data, this can further improve compression performance of the sensing data to reduce feedback overheads of the sensing data.

In a possible design, if the sensing geometric structure matches the environmental geometric structure and the sensing data point matches the scanned region on the environmental geometric structure, the compression level is a first compression level; if the sensing geometric structure matches the environmental geometric structure and the sensing data point does not match the scanned region on the environmental geometric structure, the compression level is a second compression level; and if the sensing geometric structure does not match the environmental geometric structure, the compression level is a third compression level, where the first compression level is greater than the second compression level, and the second compression level is greater than or equal to the third compression level.

For example, that the first compression level is greater than the second compression level and the second compression level is greater than or equal to the third compression level may be as follows: A quantization bit quantity corresponding to the first compression level is less than a quantization bit quantity corresponding to the second compression level, and the quantization bit quantity corresponding to the second compression level is less than or equal to a quantization bit quantity corresponding to the third compression level.

In a possible design, alternatively, if the sensing geometric structure matches the environmental geometric structure and the sensing data point matches the scanned region on the environmental geometric structure, the compression level is a first compression level; and if the sensing geometric structure matches the environmental geometric structure and the sensing data point does not match the scanned region on the environmental geometric structure, or if the sensing geometric structure does not match the environmental geometric structure, the compression level is a second compression level.

According to the foregoing design, a higher correlation between the sensing data point corresponding to the sensing geometric structure and the environmental geometric structure and the scanned region on the environmental geometric structure that are indicated by the second communication apparatus indicates a higher compression level at which the first communication apparatus can compress the sensing data point corresponding to the sensing geometric structure. When ensuring feedback performance of the sensing data, this can further improve compression performance of the sensing data to reduce the feedback overheads of the sensing data.

In a possible design, if the sensing geometric structure matches the environmental geometric structure and the sensing data point matches the scanned region on the environmental geometric structure, the compression mode is a first compression mode; if the sensing geometric structure matches the environmental geometric structure and the sensing data point does not match the scanned region on the environmental geometric structure, the compression mode is a second compression mode; and if the sensing geometric structure does not match the environmental geometric structure, the compression mode is a third compression mode. Optionally, compression efficiency (for example, a percentage of a data amount reduced through compression) of the first compression mode is greater than compression efficiency of the second compression mode, and the compression efficiency of the second compression mode is greater than or equal to compression efficiency of the third compression mode.

In a possible design, alternatively, if the sensing geometric structure matches the environmental geometric structure and the sensing data point matches the scanned region on the environmental geometric structure, the compression mode is a first compression mode; and if the sensing geometric structure matches the environmental geometric structure and the sensing data point does not match the scanned region on the environmental geometric structure, or if the sensing geometric structure does not match the environmental geometric structure, the compression mode is a second compression mode.

According to the foregoing design, the first communication apparatus can select a different compression mode for compression based on the correlation between the sensing data point corresponding to the sensing geometric structure and the environmental geometric structure and the scanned region on the environmental geometric structure that are indicated by the second communication apparatus, for example, select a compression mode corresponding to different compression efficiency. When ensuring feedback performance of the sensing data, this can improve compression performance of the sensing data to reduce the feedback overheads of the sensing data.

In a possible design, the first indication information further indicates a sensing data point density of the scanned region on the environmental geometric structure and/or a sensing data point quantity of the scanned region on the environmental geometric structure; and the compression mode or the compression level is determined based on at least one of whether the sensing geometric structure matches the environmental geometric structure, whether the sensing data point matches the scanned region on the environmental geometric structure, the sensing data point density of the scanned region on the environmental geometric structure, or the sensing data point quantity of the scanned region on the environmental geometric structure.

In an example, the compression level is used as an example. If the sensing geometric structure matches the environmental geometric structure, the sensing data point matches the scanned region on the environmental geometric structure, and the sensing data point density of the scanned region on the environmental geometric structure is greater than or equal to a first threshold, the compression level may be a compression level A. If the sensing geometric structure matches the environmental geometric structure, the sensing data point matches the scanned region on the environmental geometric structure, and the sensing data point density of the scanned region on the environmental geometric structure is less than the first threshold, the compression level may be a compression level B. If the sensing geometric structure matches the environmental geometric structure, and the sensing data point does not match the scanned region on the environmental geometric structure, the compression level may be a compression level C. If the sensing geometric structure does not match the environmental geometric structure, the compression level may be a compression level D. The compression level A is greater than the compression level B, the compression level B is greater than the compression level C, and the compression level C is greater than or equal to the compression level D.

According to the foregoing design, when the compression level of the sensing data point corresponding to the sensing geometric structure is determined, the sensing data point density and/or quantity of the scanned region of the second communication apparatus may be further considered, to perform fine-grained division of the compression mode or the compression level. This helps further compress a sensing data point corresponding to a sensing geometric structure that is repeatedly scanned, to reduce a transmission amount of the sensing data.

In a possible design, the environmental geometric structure is an environmental plane, the sensing geometric structure is a sensing plane, the sensing plane corresponds to a plurality of sensing data points, and compressing, based on the first indication information, the sensing data point corresponding to the sensing geometric structure in the first sensing region, to obtain the compressed data includes: generating second indication information, where the second indication information indicates position information of the plurality of sensing data points and the sensing plane on which the plurality of sensing data points are located, and position information of any sensing data point is determined based on two-dimensional data in three-dimensional data of the sensing data point.

According to the foregoing design, the first indication information can indicate the position information of the sensing data points and the sensing plane on which the sensing data points are located. A receive end can reconstruct the sensing data points based on the position information (two-dimensional data) of the sensing data points and the sensing plane on which the sensing data points are located, to further reduce a data amount of the obtained compressed data.

In a possible design, the method includes: determining, based on three-dimensional data of the plurality of sensing data points and three-dimensional data of a plurality of reconstructed points corresponding to the plurality of sensing data points, residuals corresponding to the plurality of sensing data points, where the three-dimensional data of the plurality of reconstructed points corresponding to the plurality of sensing data points is determined based on the position information of the plurality of sensing data points and the sensing plane; and compressing, based on the compression mode or the compression level, the residuals corresponding to the plurality of sensing data points, to obtain compressed data.

According to the foregoing design, the residual between the sensing data point and the reconstructed point can be further sent, to further improve reconstruction performance of the sensing data point.

In a possible design, if the sensing geometric structure does not match the environmental geometric structure, the compressed data further includes a parameter or a key sensing data point of the sensing geometric structure, and the key sensing data point is used to determine the sensing geometric structure.

The foregoing design helps the second communication apparatus determine the sensing geometric structure and obtain, through decompression based on the sensing geometric structure, the sensing data point corresponding to the sensing geometric structure.

In a possible design, whether the sensing geometric structure matches the environmental geometric structure is determined based on whether a distance between the sensing geometric structure and the environmental geometric structure is less than or equal to a distance threshold.

According to the foregoing design, whether the sensing geometric structure matches the environmental geometric structure can be quickly determined based on the distance between the sensing geometric structure and the environmental geometric structure.

In a possible design, the method further includes: receiving third indication information from the second communication apparatus, where the third indication information indicates at least one of the first compression level, the second compression level, or the third compression level.

The foregoing design helps the second communication apparatus adjust the compression level (for example, quantization precision corresponding to compression) of the first communication apparatus based on a requirement on performance of the sensing data.

In a possible design, the method further includes: receiving fourth indication information from the second communication apparatus, where the fourth indication information indicates at least one of the first compression mode, the second compression mode, or the third compression mode.

The foregoing design helps the second communication apparatus adjust, based on a requirement on performance of the sensing data, the compression mode used by the first communication apparatus.

In a possible design, there are a plurality of sensing geometric structures in the first sensing region, and before sending the compressed data to the second communication apparatus, the method further includes: classifying the plurality of sensing geometric structures into at least two levels based on at least one of whether each of the plurality of sensing geometric structures matches the environmental geometric structure or whether a sensing data point corresponding to the sensing geometric structure matches the scanned region on the environmental geometric structure, where the at least two levels include a first level and a second level, and a transmission priority of compressed data at the first level is higher than a transmission priority of compressed data at the second level.

According to the foregoing design, the compressed data can be transmitted hierarchically. In scenarios with limited resources or the like, it can be ensured that sensing data required by the second communication apparatus is preferably sent.

In a possible design, the first indication information further indicates the sensing data point density of the scanned region on the environmental geometric structure and/or the sensing data point quantity of the scanned region on the environmental geometric structure; and classifying the plurality of sensing geometric structures into the at least two levels based on at least one of whether each of the plurality of sensing geometric structures matches the environmental geometric structure or whether the sensing data point corresponding to the sensing geometric structure matches the scanned region on the environmental geometric structure includes: classifying the plurality of sensing geometric structures into the at least two levels based on at least one of whether each of the plurality of sensing geometric structures matches the environmental geometric structure, whether the sensing data point corresponding to the sensing geometric structure matches the scanned region on the environmental geometric structure, the sensing data point density of the scanned region on the environmental geometric structure, or the sensing data point quantity of the scanned region on the environmental geometric structure.

According to the foregoing design, the sensing data point density and/or data of the scanned region on the environmental geometric structure can be further considered, the compressed data can be transmitted hierarchically, and scenarios with limited resources or the like, it can be ensured that the sensing data required by the second communication apparatus is preferably sent.

In a possible design, before compressed data corresponding to a sensing geometric structure at the second level in the plurality of sensing geometric structures is sent to the second communication apparatus, the method further includes: determining that fifth indication information from the second communication apparatus is received, where the fifth indication information indicates to continue to transmit the compressed data.

According to the foregoing design, the compressed data can be transmitted hierarchically based on the indication of the second communication apparatus, and in the scenarios with limited resources or the like, the second communication apparatus conveniently adjusts sending of the compressed data of the first communication apparatus.

According to a second aspect, an embodiment of this application provides a sensing data feedback method. The method may be performed by a second communication apparatus. The method includes: sending first indication information to a first communication apparatus, where the first indication information indicates an environmental geometric structure in a first sensing region and a scanned region on the environmental geometric structure; and receiving compressed data from the first communication apparatus, where a compression mode or a compression level corresponding to the compressed data is determined based on at least one of whether a sensing geometric structure corresponding to the compressed data matches the environmental geometric structure or whether a sensing data point corresponding to the sensing geometric structure matches the scanned region on the environmental geometric structure.

In a possible design, if the sensing geometric structure matches the environmental geometric structure and the sensing data point matches the scanned region on the environmental geometric structure, the compression level is a first compression level; if the sensing geometric structure matches the environmental geometric structure and the sensing data point does not match the scanned region on the environmental geometric structure, the compression level is a second compression level; and if the sensing geometric structure does not match the environmental geometric structure, the compression level is a third compression level, where the first compression level is greater than the second compression level, and the second compression level is greater than or equal to the third compression level.

For example, that the first compression level is greater than the second compression level and the second compression level is greater than or equal to the third compression level includes: A quantization bit quantity corresponding to the first compression level is less than a quantization bit quantity corresponding to the second compression level, and the quantization bit quantity corresponding to the second compression level is less than or equal to a quantization bit quantity corresponding to the third compression level.

In a possible design, if the sensing geometric structure matches the environmental geometric structure and the sensing data point matches the scanned region on the environmental geometric structure, the compression mode is a first compression mode; if the sensing geometric structure matches the environmental geometric structure and the sensing data point does not match the scanned region on the environmental geometric structure, the compression mode is a second compression mode; and if the sensing geometric structure does not match the environmental geometric structure, the compression mode is a third compression mode.

In a possible design, the environmental geometric structure is an environmental plane, the sensing geometric structure is a sensing plane, the sensing plane corresponds to a plurality of sensing data points, the compressed data further includes second indication information, the second indication information indicates position information of the plurality of sensing data points and the sensing plane on which the plurality of sensing data points are located, and position information of any sensing data point is determined based on two-dimensional data in three-dimensional data of the sensing data point.

In a possible design, the compressed data is determined by compressing, based on the compression mode or the compression level, residuals corresponding to the plurality of sensing data points, where the residuals corresponding to the plurality of sensing data points are determined based on three-dimensional data of the plurality of sensing data points and three-dimensional data of a plurality of reconstructed points corresponding to the plurality of sensing data points, and three-dimensional data of a reconstructed point corresponding to any sensing data point is determined based on position information of the sensing data point and the sensing plane.

In a possible design, if the sensing geometric structure does not match the environmental geometric structure, the compressed data further includes a parameter or a key data point of the sensing geometric structure, and the key data point is used to determine the sensing geometric structure.

In a possible design, the method further includes: sending third indication information to the first communication apparatus, where the third indication information indicates at least one of the first compression level, the second compression level, or the third compression level.

In a possible design, the method further includes: sending fourth indication information to the first communication apparatus, where the fourth indication information indicates at least one of the first compression mode, the second compression mode, or the third compression mode.

In a possible design, there are a plurality of sensing geometric structures in the first sensing region, and receiving the compressed data from the first communication apparatus includes: receiving compressed data at a first level from the first communication apparatus, where the compressed data at the first level includes compressed data corresponding to a sensing geometric structure at the first level in the plurality of sensing geometric structures; and receiving compressed data at a second level from the first communication apparatus, where the compressed data at the second level includes compressed data corresponding to a sensing geometric structure at the second level in the plurality of sensing geometric structures, the plurality of sensing geometric structures are classified into at least two levels by the first communication apparatus, and the at least two levels include the first level and the second level.

In a possible design, before receiving the compressed data at the second level from the first communication apparatus, the method further includes: sending fifth indication information to the first communication apparatus, where the fifth indication information indicates to continue to transmit the compressed data.

In a possible design, the first indication information further indicates a sensing data point density of the scanned region on the environmental geometric structure and/or a sensing data point quantity of the scanned region on the environmental geometric structure.

According to a third aspect, an embodiment of this application provides a communication apparatus. The apparatus has functions of implementing the method according to the first aspect or the second aspect. The function may be implemented by hardware, or may be implemented by hardware executing corresponding software. The hardware or the software includes one or more modules corresponding to the functions, for example, includes an interface unit and a processing unit.

In a possible design, the apparatus may be a chip or an integrated circuit.

In a possible design, the apparatus includes a memory and a processor. The memory is configured to store instructions to be executed by the processor. When the instructions are executed by the processor, the apparatus may perform the method according to the first aspect or the second aspect.

According to a fourth aspect, an embodiment of this application provides a communication apparatus. The communication apparatus includes an interface circuit and a processor. The processor and the interface circuit are coupled to each other. The processor is configured to implement the method according to the first aspect or the second aspect through a logic circuit or by executing instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver apparatus, or an input/output interface.

Optionally, the communication apparatus may further include a memory, configured to store the instructions to be executed by the processor, store input data required by the processor to run the instructions, or store data generated after the processor runs the instructions. The memory may be a physically independent unit, or may be coupled to the processor, or the processor includes the memory (that is, the processor and the memory are integrated).

In a possible implementation, the communication apparatus is a chip.

According to a fifth aspect, an embodiment of this application provides a communication system. The communication system includes a first communication apparatus and a second communication apparatus. The first communication apparatus is configured to implement the method according to the first aspect. The second communication apparatus is configured to implement the method according to the second aspect.

According to a sixth aspect, an embodiment of this application provides a computer-readable storage medium. The computer-readable storage medium stores a computer program or instructions. When the computer program or the instructions are executed by a processor, the method according to the first aspect or the second aspect may be implemented.

According to a seventh aspect, an embodiment of this application further provides a computer program product, including a computer program or instructions. When the computer program or the instructions are executed by a processor, the method according to the first aspect or the second aspect may be implemented.

According to an eighth aspect, an embodiment of this application further provides a chip system. The chip system includes a processor. The processor is configured to be coupled to a memory. The memory is configured to store a program or instructions. When the program or the instructions are executed by the processor, the method according to the first aspect or the second aspect may be implemented.

For technical effect that can be achieved in the second aspect to the eighth aspect, refer to the technical effect that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of an environment reconstruction scenario according to an embodiment of this application;
FIG. 3 is a diagram 1 of a sensing data feedback method according to an embodiment of this application;
FIG. 4 is a diagram of three-dimensional coordinates according to an embodiment of this application;
FIG. 5 is a diagram of a sensing region according to an embodiment of this application;
FIG. 6 is a diagram of a Y-axis coordinate distribution probability of a sensing data point according to an embodiment of this application;
FIG. 7 is a 2D indication diagram 1 according to an embodiment of this application;
FIG. 8 is a 2D indication diagram 2 according to an embodiment of this application;
FIG. 9 is a 2D indication diagram 3 according to an embodiment of this application;
FIG. 10 is a diagram of determining a residual according to an embodiment of this application;
FIG. 11 is a diagram of data content according to an embodiment of this application;
FIG. 12 is a diagram 2 of a sensing data feedback method according to an embodiment of this application;
FIG. 13 is a diagram of transmitting data hierarchically according to an embodiment of this application;
FIG. 14 is a diagram 3 of a sensing data feedback method according to an embodiment of this application;
FIG. 15 is a diagram of a simulation environment according to an embodiment of this application;
FIG. 16A is a diagram 1 of a simulation according to an embodiment of this application;
FIG. 16B is a diagram 2 of a simulation according to an embodiment of this application;
FIG. 17A is a diagram 3 of a simulation according to an embodiment of this application;
FIG. 17B is a diagram 4 of a simulation according to an embodiment of this application;
FIG. 18 is a diagram 1 of a structure of a communication apparatus according to an embodiment of this application; and
FIG. 19 is a diagram 2 of a structure of a communication apparatus according to an embodiment of this application.

### DESCRIPTION OF EMBODIMENTS

Technical solutions in embodiments of this application may be applied to various communication systems, for example, a long term evolution (long term evolution, LTE) system, an LTE-advanced (LTE-advanced, LTE-A) system, a universal mobile telecommunications system (universal mobile telecommunications system, UMTS), a 5th generation (5th generation, 5G) mobile communication system, a beyond 5G (beyond 5G, B5G) mobile communication system, a communication system evolved after 5G, and the like. The communication system may alternatively be a device-to-device (device-to-device, D2D) network, a Wi-Fi network, a machine to machine (machine to machine, M2M) network, an internet of things (internet of things, IoT) network, or another network.

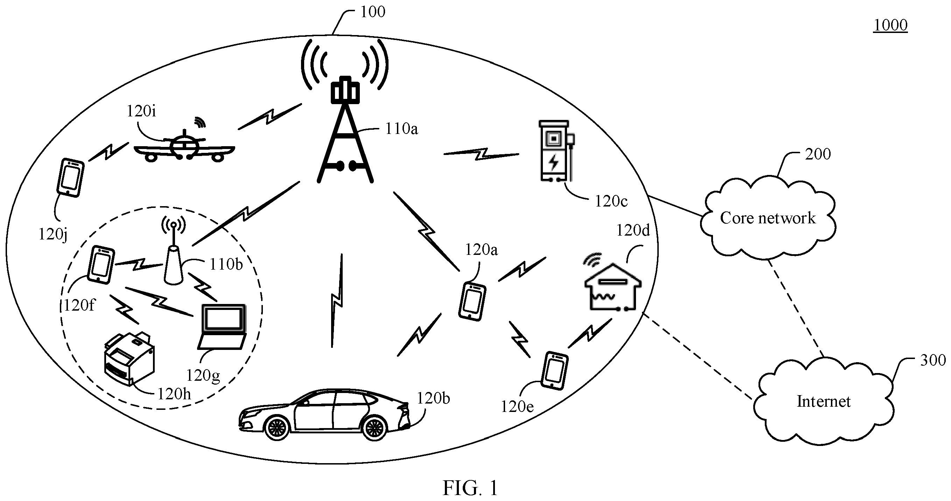

An architecture of a communication system to which embodiments of this application are applied may be shown in FIG. 1. A communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, collectively referred to as 110) and at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be respectively different physical devices, or may be a same physical device that integrates a core network logical function and a radio access network logical function.

The RAN 100 may be a cellular system related to the 3rd generation partnership project (3rd generation partnership project, 3GPP), for example, a 4G system, a 5G system, or an evolved system after 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, a network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Both the network device 110 and the terminal device 120 are sometimes referred to as communication apparatuses. For example, network elements 110a and 110b in FIG. 1 may be understood as communication apparatuses having a base station function, and network elements 120a to 120j may be understood as communication apparatuses having a terminal device function.

In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a base station in a future mobile communication system, a satellite, an access point (access point, AP) in a Wi-Fi system, an integrated access and backhaul (integrated access and backhaul, IAB) node, a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal device in implementing wireless access, and different network devices separately implement parts of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of the software module and the hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in combination with the network device.

The terminal device 120 may also be referred to as a terminal, user equipment (user equipment, UE), a mobile station (mobile station, MS), a mobile terminal (mobile terminal, MT), or the like, and may be a device configured to provide voice or data connectivity for a user, may be an internet of things device, or may be a station (station, STA) in a Wi-Fi system. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus configured to implement a function of the terminal device may be a terminal device, or an apparatus, for example, a chip system, that can support the terminal device in implement the function. The apparatus may be mounted in the terminal device or used in combination with a terminal device. In an embodiment of this application, the chip system may include a chip, or may include a chip and another discrete device.

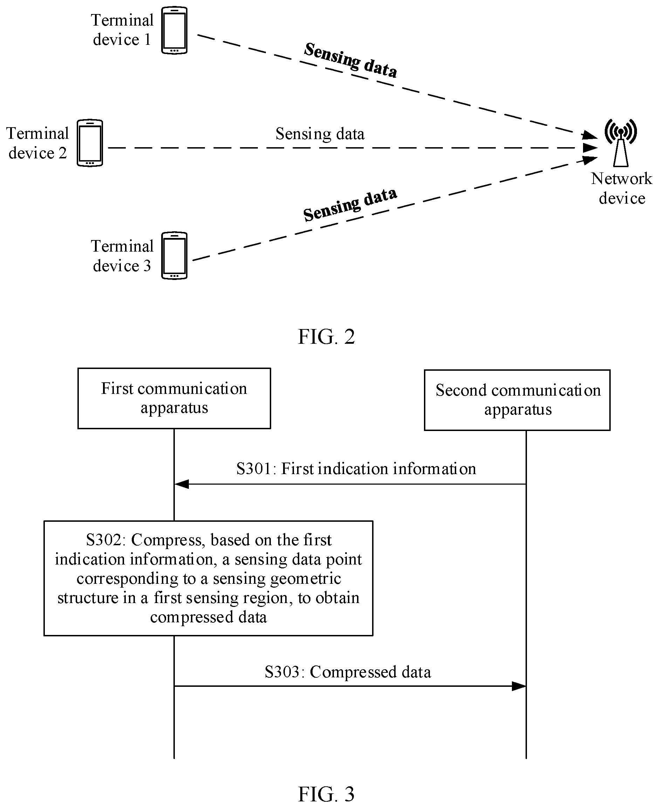

Based on the architecture of the communication system shown in FIG. 1, FIG. 2 shows an example of an environment reconstruction scenario to which an embodiment of this application is applicable. In FIG. 2, an example in which a network device and a plurality of terminal devices (a terminal device 1 to a terminal device 3) are included is used. The plurality of terminal devices may separately scan an object in an environment, obtain sensing data (which may also be referred to as imaging data or point cloud data), and upload the sensing data to the network device. The network device may perform information fusion and environmental map construction based on the sensing data collected by the plurality of terminal devices. Because the sensing data obtained by the plurality of terminal devices may overlap, in this embodiment of this application, a correlation between the sensing data obtained by the plurality of terminal devices may be considered, to improve compression performance of the sensing data, to reduce feedback overheads of the sensing data. In view of this, this application provides a sensing data feedback method and apparatus, to reduce the feedback overheads of the sensing data. The following describes in detail embodiments of this application with reference to accompanying drawings.

In addition, it should be understood that ordinal numbers such as "first" and "second" in embodiments of this application are intended to distinguish between a plurality of objects, but are not intended to limit sizes, content, a sequence, a time sequence, priorities, importance, or the like of the plurality of objects. For example, a first communication apparatus and a second communication apparatus do not indicate different priorities, importance, or the like corresponding to the two messages.

In embodiments of this application, unless otherwise specified, a quantity of nouns indicates "a singular noun or a plural noun", namely, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof means any combination of these items, including a single item (piece) or any combination of a plurality of items (pieces). For example, at least one of a, b, or c indicates: a, b, c, a and b, a and c, b and c, or a, b, and c, where a, b, and c may be singular or plural.

The sensing data feedback method provided in embodiments of this application may be performed by a first communication apparatus and a second communication apparatus. The first communication apparatus and the second communication apparatus are different communication apparatuses. The first communication apparatus (or the second communication apparatus) may be a terminal device, a component (for example, a processor, a chip, or a chip system) of the terminal device, or an apparatus that is used in combination with the terminal device, or may be a network device, a component (for example, a processor, a chip, or a chip system) of the network device, or an apparatus that is used in combination with the network device. The first communication apparatus may be used as a transmit end of the sensing data, and compress the sensing data. The second communication apparatus may be used as a receive end to decompress and restore the sensing data.

For example, the first communication apparatus may be a terminal device, and the second communication apparatus may be a network device. The terminal device may obtain the sensing data, compress the sensing data, and send the compressed sensing data to the second communication apparatus. The network device may decompress and restore the sensing data.

FIG. 3 is a diagram of a sensing data feedback method according to an embodiment of this application. The method includes the following steps.

S301: A second communication apparatus sends first indication information to a first communication apparatus, and correspondingly, the first communication apparatus receives the first indication information.

The first indication information indicates an environmental geometric structure in a first sensing region and a scanned region on the environmental geometric structure.

In this embodiment of this application, the first communication apparatus may be used as a sensing device or a scanning device to scan a sensing region (for example, the first sensing region), to obtain sensing data; or the first communication apparatus may obtain the sensing data from another communication apparatus. This is not limited in this application. For example, the sensing data obtained by the first communication apparatus may be a set of sensing data points (which may also be referred to as data points), and each sensing data point may correspond to one point in space, and may include data that is in at least one dimension and that is obtained by scanning the point. For example, three-dimensional (three dimensions, 3D) coordinates of the point (a coordinate in each dimension may correspond to data in the dimension) may further include one or more of echo signal strength and round-trip time of a sensing signal (for example, an electromagnetic wave signal).

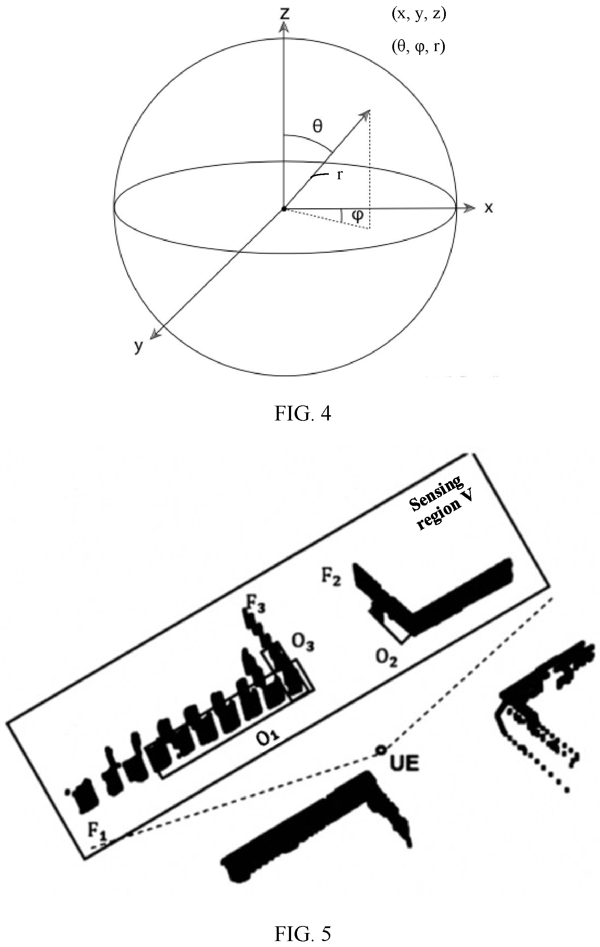

FIG. 4 is a diagram of the three-dimensional coordinates. The three-dimensional coordinates recorded by the sensing data point may be spherical coordinates (θ, φ, R) represented by using a vertical angle θ (which may also be referred to as a pitch angle), a horizontal angle φ (which may also be referred to as a yaw angle), and a distance R from the point to an origin in a spherical coordinate system, or may be Cartesian coordinates (x, y, z) represented by using an x value (x-axis coordinate), a y value (y-axis coordinate), and a z value (z-axis coordinate) in a Cartesian coordinate system, and certainly, may alternatively be three-dimensional coordinates in another three-dimensional coordinate system (for example, a cylindrical coordinate system). A specific form of the three-dimensional coordinates is not limited in this application. It may be understood that three-dimensional coordinates in different coordinate systems may be mutually converted.

For example, an algorithm for mapping from the Cartesian coordinate system to the spherical coordinate system may satisfy the following formulas: $θ = arcsin \left(z/\sqrt{{x}^{2} + {y}^{2} + {z}^{2}}\right) , ∅ = arccos \left(x/\sqrt{{x}^{2} + {y}^{2}}\right) , and R = \sqrt{{x}^{2} + {y}^{2} + {z}^{2}}$

In some implementations, the three-dimensional coordinates of the sensing data point may alternatively be transformed three-dimensional coordinates. For example, the spherical coordinates may be transformed into (θ, φ, a), where a∈{x, y, z, r, R...}, θ represents the vertical angle of the sensing data point in the spherical coordinate system, θ represents the horizontal angle of the sensing data point in the spherical coordinate system, x represents an abscissa of the sensing data point in the Cartesian coordinate system, y represents an ordinate of the sensing data point in the Cartesian coordinate system, z represents an applicate of the sensing data point in the Cartesian coordinate system, r represents a distance from a projection of the sensing data point onto a horizontal plane to an origin in the Cartesian coordinate system, R represents the distance from the sensing data point to the origin in the spherical coordinate system, and $r = \sqrt{{x}^{2} + {y}^{2}}$. Herein, x, y, z, r, R, and the like may be determined based on the three-dimensional coordinates of the sensing data point. Details are not described again.

When the sensing region (for example, the first sensing region) is scanned, a surface of a scanned object generally presents a specific geometric structure (for example, a plane or a curved surface). In this case, the sensing data (the set of sensing data points) obtained through scanning usually includes a sensing data point corresponding to the geometric structure. If different communication apparatuses scan a same region, sensing data obtained through scanning by the different communication apparatuses also includes the sensing data point corresponding to the geometric structure. In this embodiment of this application, to reduce a transmission amount of the sensing data and obtain higher compression performance, before the first communication apparatus sends, to the second communication apparatus, the sensing data corresponding to the sensing region (for example, the first sensing region), the second communication apparatus can indicate environment information to the first communication apparatus, for example, indicate the environmental geometric structure in the sensing region and the scanned region on the environmental geometric structure.

It may be understood that the second communication apparatus may indicate the environmental geometric structure by sending a parameter, a key data point, or the like of the environmental geometric structure to the first communication apparatus, or may indicate the scanned region by sending a coordinate range, a key data point, or the like of the scanned region. The key data point of the environmental geometric structure may be the same as or different from the key data point of the scanned region on the environmental geometric structure. If the key data points are the same, the environmental geometric structure and the scanned region on the environmental geometric structure may be determined based on the key data point.

For example, the environmental geometric structure is an environmental plane, and the sensing geometric structure is a sensing plane. Refer to FIG. 5. A sensing region V is a region that is scanned (or sensed) by the first communication apparatus to obtain the sensing data; F₁, F₂, and F₃ respectively represent three environmental planes determined by the second communication apparatus in the sensing region V based on the obtained sensing data; and O₁, O₂, and O₃ respectively represent distribution regions of the sensing data obtained by the second communication apparatus on F₁, F₂, and F₃, namely, scanned regions on F₁, F₂, and F₃. The first indication information sent by the second communication apparatus to the first communication apparatus may indicate the environmental planes F₁, F₂, and F₃ and the scanned regions O₁, O₂, and O₃ respectively corresponding to the environmental planes F₁, F₂, and F₃.

In an example, parameters of the environmental planes F₁, F₂, and F₃ may be respectively (A₁, B₁, C₁, D₁), (A₂, B₂, C₂, D₂), and (A₃, B₃, C₃, D₃), and the scanned regions O₁, O₂, and O₃ may be respectively indicated by (Minₓ₁, Min_{y1} , Min_{z1}, Maxₓ₁, Max_{y1}, Max_{z1}) , (Minₓ₂, Min_{y2}, Min_{z2}, Maxₓ₂, Max_{y2}, Max_{z2}) , and (Minₓ₃, Min_{y3}, Min_{z3}, Maxₓ₃, Max_{y3}, Max_{z3}), where the environmental plane F₁ is F₁(x, y, z) = A₁x + B₁y+C₁z + D₁ = 0, the environmental plane F₂ is F₂ (x, y, z) = A₂x + B₂y+C₂z + D₂ = 0, the environmental plane F₃ is F₃ (x, y, z) = A₂x + B₂y+C₂z + D₂ = 0, and the scanned regions on the environmental planes F₁, F₂, and F₃ are respectively enclosed regions of (Minₓ₁, Min_{y1} , Min_{z1}, Maxₓ₁, Max_{y1}, Max_{z1}), (Minₓ₂, Min_{y2}, Min_{z2}, Maxₓ₂, Max_{y2}, Max_{z2}), and(Minₓ₃, Min_{y3}, Min_{z3}, Maxₓ₃, Max_{y3}, Max_{z3}).

It may be understood that any scanned region (or environmental geometric structure) may alternatively be determined by using a key data point of the scanned region. For example, the key data point of the scanned region may be a plurality of boundary data points of the scanned region. The first communication apparatus may determine the scanned region based on an enclosed region of the plurality of boundary data points (or a rectangular region including the plurality of boundary data points, or the like). The key data point of the scanned region may alternatively be a data point located in a concave region and/or a data point located in a convex region of the scanned region. The first communication apparatus may determine the scanned region based on an enclosed region of a plurality of boundary data points (or a rectangular region including the plurality of boundary data points, or the like), or the like. The key data point of the scanned region is not limited in this application, provided that the scanned region can be determined. Similarly, the environmental geometric structure may also be determined by using the key point of the environmental geometric structure. For example, the sensing geometric structure is an environmental plane. One or more sensing data points of the environmental plane (for example, three sensing data points that are not on a same straight line and that are located on the environmental plane) can be determined as key data points of the environmental plane.

In some implementations, the first indication information may further indicate a sensing data point density of the scanned region and/or a sensing data point quantity of the scanned region, for example, indicate sensing data point densities d₁, d_{2,} and d₃ respectively corresponding to the scanned regions O₁, O₂, and O₃. The second communication apparatus may determine a sensing data point density of any scanned region based on a ratio of a quantity of sensing data points that are in the obtained sensing data and that are located in the scanned region to a volume of the scanned region, a projection area of the scanned region on a plane, or the like. This is not limited in this application.

The second communication apparatus may determine, based on range information that is of the first sensing region and that is reported by the first communication apparatus, position information of the first communication apparatus, or the like, the first sensing region corresponding to the sensing data obtained by the first communication apparatus. This is not limited in this application.

For example, the first communication apparatus may send, to the second communication apparatus, a three-dimensional coordinate range of the first sensing region, for example, a range of an x-axis coordinate, a range of a y-axis coordinate, and a range of a z-axis coordinate of the first sensing region. The second communication apparatus may determine the first sensing region based on the three-dimensional coordinate range sent by the first communication apparatus. Alternatively, the second communication apparatus may determine the first sensing region based on a position and a field of view (view) of the first communication apparatus.

In some implementations, the first sensing region corresponding to the sensing data obtained by the first communication apparatus may alternatively be indicated or configured by the second communication apparatus. For example, in a scenario like map reconstruction or target sensing, the second communication apparatus may indicate, based on a sensing requirement, the first communication apparatus to scan or sense a sensing region (for example, the first sensing region).

S302: The first communication apparatus compresses, based on the first indication information, the sensing data point corresponding to the sensing geometric structure in the first sensing region, to obtain compressed data.

A compression mode or a compression level of the sensing data point may be determined based on at least one of whether the sensing geometric structure matches the environmental geometric structure and whether the sensing data point matches the scanned region on the environmental geometric structure.

S303: The first communication apparatus sends the compressed data to the second communication apparatus, and correspondingly, the second communication apparatus receives the compressed data.

After obtaining the sensing data (the set of sensing data points) corresponding to the first sensing region, the first communication apparatus may identify the sensing geometric structure existing in the first sensing region.

For example, the sensing geometric structure is a sensing plane. The first communication apparatus may input the sensing data (the set of sensing data points) into an artificial intelligence (artificial intelligence, AI)-based plane identification model for processing, and identify a sensing plane existing in the first sensing region, to obtain a parameter of the sensing plane.

Alternatively, the first communication apparatus may extract fitting sensing data points based on distribution probabilities of one or more of x values (or y values or z values) and the like of the sensing data points in the sensing data and a segment of consecutive x values (or y values or z values) with a high probability of occurrence, and obtain at least one sensing plane through fitting, to obtain a parameter of the at least one sensing plane.

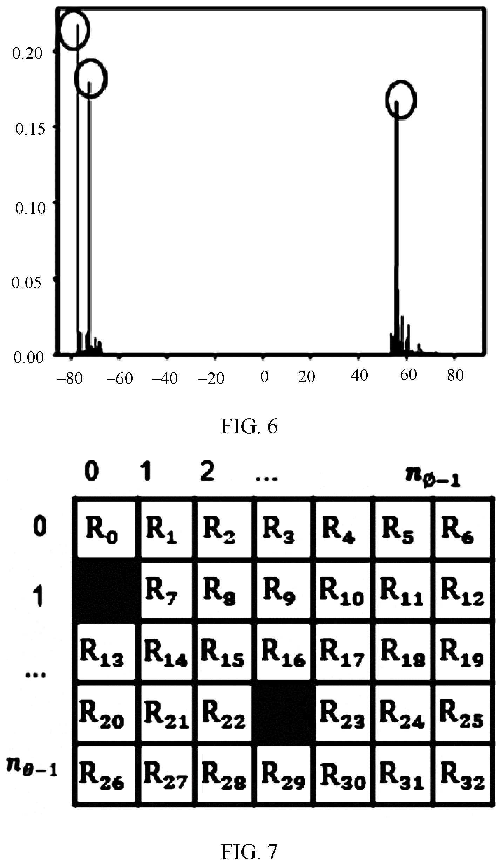

FIG. 6 is a diagram of distribution probabilities of y values of a plurality of sensing data points. In FIG. 6, a horizontal axis represents the y values (namely, y-axis coordinates) of the plurality of sensing data points, and a vertical axis represents the distribution probabilities (or percentages) of the sensing data points. It can be learned from FIG. 6 that y values that are of sensing data points and whose distribution probabilities are greater than a distribution probability threshold (for example, the distribution probability threshold is 0.05) are respectively -77, -75, and 47. It may be determined that y value distribution intervals [-77.25, -76.75], [-75.25, -74.75], and [46.75, 47.25] respectively corresponding to -77, -75, and 47 may be used for plane fitting. The first communication apparatus may obtain a sensing plane A₁ through fitting according to a least square method based on a plurality of sensing data points whose y values are in [-77.25, -76.75], obtain a sensing plane A₂ through fitting according to the least square method based on a plurality of sensing data points whose y values are in [-75.25, -74.75], and obtain a sensing plane A₃ through fitting according to the least square method based on a plurality of sensing data points whose y values are in [46.75, 47.25], to obtain parameters of the sensing plane A₁, the sensing plane A₂, and the sensing plane A₃.

In this embodiment of this application, the sensing data corresponding to the sensing geometric structure may be classified into different categories based on one or more of whether the sensing geometric structure matches the environmental geometric structure and whether the sensing data points corresponding to the sensing geometric structure match the scanned region on the environmental geometric structure, and a different compression mode or compression level is used, to reduce a data transmission amount.

For example, if the sensing geometric structure matches the environmental geometric structure, and the sensing data point corresponding to the sensing geometric structure matches the scanned region on the environmental geometric structure, the sensing data point corresponding to the sensing geometric structure may be classified into a category 1, and may be compressed at a first compression level (or in a first compression mode) corresponding to the category 1; if the sensing geometric structure matches the environmental geometric structure, and the sensing data point corresponding to the sensing geometric structure does not match the scanned region on the environmental geometric structure, the sensing data point corresponding to the sensing geometric structure may be classified into a category 2, and may be compressed at a second compression level (or in a second compression mode) corresponding to the category 2; and if the sensing geometric structure does not match the environmental geometric structure, the sensing data point corresponding to the sensing geometric structure may be classified into a category 3, and may be compressed at a third compression level (or in a third compression mode) corresponding to the category 3.

The first compression level may be greater than the second compression level, and the second compression level may be greater than or equal to the third compression level. It should be understood that the compression level may also be referred to as a compression ratio. A higher compression level (or compression ratio) indicates better compression performance, and contrarily, a lower compression level (or compression ratio) indicates poorer compression performance. In some implementations, the second compression level may alternatively be less than the third compression level.

A quantization bit quantity is a quantity of binary digits required to distinguish all quantization levels. For example, if there are eight quantization levels, three binary digits may be used for distinguishing. Quantization precision may be represented as a ratio of a range of a value that needs to be quantized to a quantity of quantization levels. If the sensing data point is compressed in a quantization compression mode, a larger quantity of quantization levels indicates higher precision of data restored through decompression. Therefore, in this embodiment of this application, that the first compression level is greater than the second compression level and the second compression level is greater than or equal to the third compression level may also mean that a quantization bit quantity corresponding to the first compression level is less than a quantization bit quantity corresponding to the second compression level, and the quantization bit quantity corresponding to the second compression level is less than or equal to a quantization bit quantity corresponding to the third compression level.

In this embodiment of this application, the first compression mode, the second compression mode, and the third compression mode may alternatively be different compression solutions. For example, the first compression mode is a compression solution in which data of all the sensing data points is compressed; the second compression mode is a compression solution in which data of one half of the sensing data points is sampled for compression, and data of another unsampled sensing data point is restored based on interpolation; and the third compression mode is a compression solution in which data of one third of the sensing data points is sampled for compression, and data of other unsampled sensing data points is restored based on interpolation. Specific modes of the first compression mode, the second compression mode, the third compression mode, and the like are not limited in this application. It may be understood that, in some implementations, different categories may alternatively correspond to a same compression mode. For example, the second compression mode corresponding to the category 2 may alternatively be the same as the third compression mode corresponding to the category 3.

The compression mode or the compression level may be determined by the first communication apparatus, or may be indicated by the second communication. In an example, the second communication apparatus may send third indication information to the first communication apparatus to indicate at least one of the first compression level, the second compression level, the third compression level, or the like, or may send fourth indication information to the first communication apparatus to indicate at least one of the first compression mode, the second compression mode, the third compression mode, or the like.

In a possible implementation, the third indication information (or the fourth indication information) may indicate the compression level (or the compression mode) in a form like an index. Refer to the following Table 1. The index being 0 indicates that the quantization bit quantities corresponding to the first compression level, the second compression level, and the third compression level are respectively 0, 8, and 8. The index being 1 indicates that the quantization bit quantities corresponding to the first compression level, the second compression level, and the third compression level are respectively 0, 7, and 7. The index being 2 indicates that the quantization bit quantities corresponding to the first compression level, the second compression level, and the third compression level are respectively 7, 8, and 8. The index being 3 indicates that the quantization bit quantities corresponding to the first compression level, the second compression level, and the third compression level are respectively 6, 7, and 7. A quantization bit quantity being 0 may indicate that a sensing data point corresponding to the compression level (or the quantization bit quantity) is not sent.

**Table 1**

| | | | | | |
|---|---|---|---|---|---|
| Quantization bit quantity | 088 | 077 | 788 | 677 | ... |
| Index | 0 | 1 | 2 | 3 | |

In some implementations, whether the sensing geometric structure matches the environmental geometric structure may be determined based on whether a distance between the sensing geometric structure and the environmental geometric structure is less than or equal to a distance threshold. If the distance between the sensing geometric structure and the environmental geometric structure is less than or equal to the distance threshold, the sensing geometric structure matches the environmental geometric structure. If the distance is greater than the distance threshold, the sensing geometric structure does not match the environmental geometric structure.

In an example, the distance between the sensing geometric structure and the environmental geometric structure may be determined based on a parameter of the sensing geometric structure and a parameter of the environmental geometric structure, for example, determined based on L2 norms of the parameter of the sensing geometric structure and the parameter of the environmental geometric structure. For example, the sensing geometric structure is a sensing plane, and the environmental geometric structure is an environmental plane. If parameters of the sensing plane are ((Aᵢ, Bᵢ, Cᵢ, Dᵢ), and parameters of the environmental plane are ((Aⱼ, Bⱼ, Cⱼ, Dⱼ), a distance d between the sensing plane and the environmental plane may be determined according to the following formula: $d = \sqrt{{\left({A}_{i}-{A}_{j}\right)}^{∧} 2 + {\left({B}_{i}-{B}_{j}\right)}^{∧} 2 + {\left({C}_{i}-{C}_{j}\right)}^{∧} 2 + {\left({D}_{i}-{D}_{j}\right)}^{∧} 2}$

If the distance d between the sensing plane and the environmental plane is less than or equal to a distance threshold T, the sensing plane matches the environmental plane. If the distance d is greater than the distance threshold T, the sensing plane does not match the environmental plane. The distance threshold may be predefined in a protocol or the like, or may be indicated by the second communication apparatus to the first communication apparatus. A manner in which the first communication apparatus obtains the distance threshold T is not limited in this application.

In another example, the distance between the sensing geometric structure and the environmental geometric structure may alternatively be determined based on a distance between a coordinate central value (for example, a central value of an x-axis coordinate, a y-axis coordinate, or a z-axis coordinate) that is in a dimension and that corresponds to the sensing geometric structure and a coordinate central value that is in the dimension and that corresponds to the environmental geometric structure. For example, the sensing geometric structure is still a sensing plane, and the environmental geometric structure is still an environmental plane. If a y-axis coordinate range of a sensing data point corresponding to the sensing plane is [*minᵢ*, *maxᵢ*], it may be determined that a central value of the y-axis coordinate range corresponding to the sensing plane is *mᵢ*=(*minᵢ*+*maxᵢ*)/2. If a y-axis coordinate range of a scanned region corresponding to the environmental plane is [*minⱼ*, *maxⱼ*], it may be determined that a central value of the y-axis coordinate range corresponding to the environmental plane is *nⱼ*=(*minⱼ*+*maxⱼ*)/2. In this case, a distance d between the sensing plane and the environmental plane may be determined according to the following formula: $d = \left‖\left({m}_{i}-{n}_{j}\right)\right‖$

If the distance d between the sensing plane and the environmental plane is less than or equal to a distance threshold T₁, the sensing plane matches the environmental plane. If the distance d is greater than the distance threshold T₁, the sensing plane does not match the environmental plane.

It may be understood that, if there are a plurality of environmental geometric structures in the first sensing region, that the sensing geometric structure matches the environmental geometric structure may mean that the sensing geometric structure matches any one of the plurality of environmental geometric structures, and that the sensing geometric structure does not match the environmental geometric structure may mean that the sensing geometric structure matches none of the plurality of environmental geometric structures.

In some implementations, whether the sensing data point corresponding to the sensing geometric structure matches the scanned region on the environmental geometric structure may be determined based on whether the sensing data point corresponding to the sensing geometric structure is located in the scanned region on the environmental geometric structure.

For example, a range of an x-axis coordinate, a range of a y-axis coordinate, and a range of a z-axis coordinate of the scanned region on the environmental geometric structure are respectively [*minₓ*, *maxₓ*], [*min_{y}*, *max_{y}*], and [*min_{z}*, *max_{z}*]. When three-dimensional coordinates (x, y, z) of the sensing data point corresponding to the sensing geometric structure satisfy *Minₓ* < *x* < *Max_{y}*, *Min_{y}* < *y* < *Max_{y}*, and *Min_{z}* < *z* < *Max_{z}*, it may be determined that the sensing data point corresponding to the sensing geometric structure is located in the scanned region on the environmental geometric structure.

It may be understood that, if there is no environmental geometric structure that matches the sensing geometric structure, it may indicate that the second communication apparatus does not obtain information recorded in the sensing data point corresponding to the sensing geometric structure, and there is no scanned region that matches the sensing data point corresponding to the sensing geometric structure. Therefore, to reduce processing resources, the first communication apparatus may determine, only when there is the environmental geometric structure that matches the sensing geometric structure, whether the sensing data point corresponding to the sensing geometric structure matches the scanned region on the environmental geometric structure.

After determining the compression mode or the compression level of the sensing data point corresponding to the sensing geometric structure, the first communication apparatus may compress, based on the compression mode or the compression level, the sensing data point corresponding to the sensing geometric structure, to obtain the compressed data, for example, compress information such as three-dimensional data (for example, the three-dimensional coordinates) recorded in the sensing data point, to obtain the compressed data.

In this embodiment of this application, the three-dimensional data (for example, the three-dimensional coordinates) of the sensing data point may be further divided into position information and a filled value corresponding to the position information, and then compressed, to improve compression performance. For example, the first communication apparatus may determine the position information (for example, a 2D structure position) based on two-dimensional data in the three-dimensional data of the sensing data point, and use the third-dimensional data as the filled value of the position information, to obtain a 2D indication diagram through design.

For example, the first communication apparatus may use the vertical angle θ and the horizontal angle φ in the spherical coordinate system as the 2D structure position, and use the distance value R to the origin as the filled value; or may use the vertical angle θ and the distance value R to the origin in the spherical coordinate system as the 2D structure position, and use the horizontal angle φ as the filled value. For another example, the x value and the y value in the Cartesian coordinate system may be used as the 2D structure position, and the z value is used as the 2D structure position.

For example, after quantizing the three-dimensional coordinates (θ, φ, R) of the sensing data point, the first communication apparatus may obtain a 2D indication diagram shown in FIG. 7. In the 2D indication diagram, each block represents one sensing data point, a horizontal axis represents a quantized value of the horizontal angle φ, a vertical axis represents a quantized value of the vertical angle θ, and a value filled in each block represents a quantized value of the distance value R from the sensing data point represented by the block to the origin. In the 2D indication diagram, there may be some 2D structure positions that do not have corresponding information. In this case, a filled value at the 2D structure position is null.

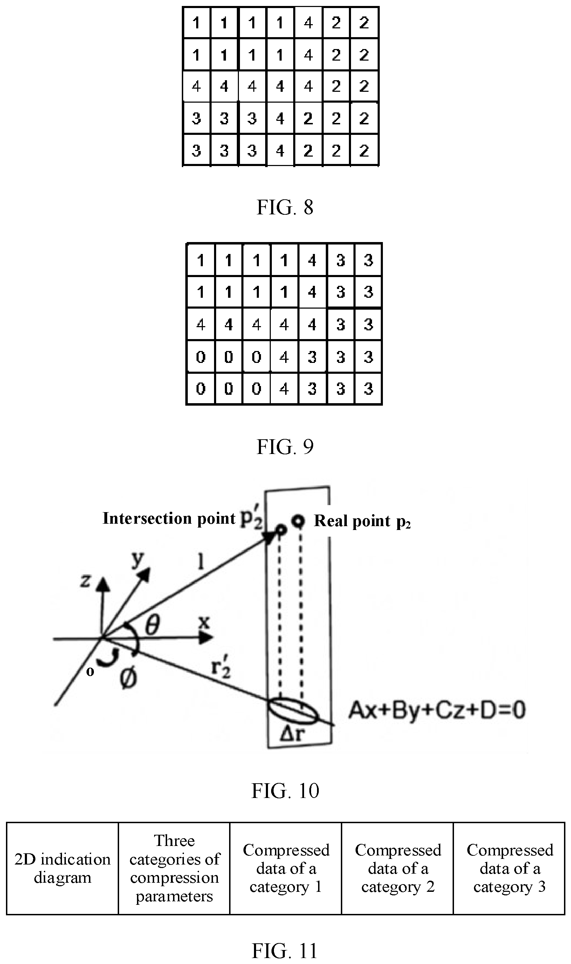

In some implementations, the first communication apparatus may send second indication information (for example, the 2D indication diagram) to the second communication apparatus, to indicate the sensing geometric structure and the position information (for example, the 2D structure position) that correspond to the sensing data point. For example, the sensing geometric structure in the first sensing region includes a sensing geometric structure H₁, a sensing geometric structure H₂, and a sensing geometric structure H₃. The 2D indication diagram may be shown in FIG. 8. Each block represents one sensing data point, a horizontal axis represents a quantized value of the horizontal angle φ, and a vertical axis represents a quantized value of the vertical angle θ. A value filled in each block represents a sensing geometric structure in which a sensing data point is located. For example, the filled value being 1 indicates that the sensing data point represented by the block is located in the sensing geometric structure H₁, similarly, the value being 2 indicates that the sensing data point represented by the block is located in the sensing geometric structure H₂, and the filled value being 3 indicates that the sensing data point represented by the block is located in the sensing geometric structure H₃, where a largest filled value 4 (or a blank filled value) may indicate that the sensing data point represented by the block is not located in the sensing geometric structure or does not exist.

In addition, the first communication apparatus may further indicate, to the second communication apparatus, whether there is the environmental geometric structure that matches the sensing geometric structure. For example, the second communication apparatus indicates that there are the environmental geometric structure F₁, the environmental geometric structure F₂, and the environmental geometric structure F₃, where the sensing geometric structure H₁ matches the environmental geometric structure F₁, the sensing geometric structure H₂ matches the environmental geometric structure F₃, and there is no environmental geometric structure that matches the sensing geometric structure H₃. In this case, the first communication apparatus may send a sequence [1, 3, 0] to the second communication apparatus, to indicate that the sensing geometric structure H₁ matches the environmental geometric structure F₁, the sensing geometric structure H₂ matches the environmental geometric structure F₃, and the sensing geometric structure H₃ is a new geometric structure.

Alternatively, refer to a 2D indication diagram shown in FIG. 9. Sensing data points corresponding to the sensing geometric structure H₁, the sensing geometric structure H₂, and the sensing geometric structure H₃ may be respectively filled with 1, 3, and 0, to indicate that the sensing geometric structure H₁ matches the environmental geometric structure F₁, the sensing geometric structure H₂ matches the environmental geometric structure F₃, and the sensing geometric structure H₃ is a new geometric structure.

For example, the horizontal axis of the 2D indication diagram represents the quantized value of the horizontal angle φ, the vertical axis represents the quantized value of the vertical angle θ, and the sensing geometric structure is a sensing plane. Refer to FIG. 10. Each sensing data point corresponds to one position in the 2D indication diagram. A vertical angle θ and a horizontal angle φ of the sensing data point may be obtained based on the position, to determine a straight line I starting from the origin: x/m=y/n=z/k=t, where m, n, and k are components that are of a spatial vector determined based on the angles θ and Ø and that are on an x-axis, a y-axis, and a z-axis, and t is a variable. With reference to plane parameters (A, B, C, D) of the plane on which the sensing data point is located, it may be determined that an intersection point ${P}_{2}^{′}$ of the straight line I and a plane Ax+By+Cz+D=0 is a reconstructed point of the sensing data point.

Further, a difference between projection distances ${r}_{2}^{′}$ and r₂ of the reconstructed point ${P}_{2}^{′}$ and a real position (a real point) P₂ of the sensing data point on the horizontal plane (or a vertical plane, or the x-axis, or the y-axis, or the z-axis) or the like may be further calculated, to obtain a residual Δr corresponding to the sensing data point. The second communication apparatus may reconstruct the sensing data point based on the vertical angle θ, the horizontal angle φ, and ${r}_{2}^{′} + Δr$.

It may be understood that ${r}_{2}^{′} + Δr$ may alternatively be represented in a form like x+Δr, y+Δr, z+Δr, or R+Δr, for example, may be represented as x+Δr when the residual Δr is determined based on the difference between the projection distances of the reconstructed point ${P}_{2}^{′}$ and the real position (namely, the real point) P₂ of the sensing data point on the x-axis, may be represented as y+Δr when the residual Δr is determined based on the difference between the projection distances of the reconstructed point ${P}_{2}^{′}$ and the real position (namely, the real point) P₂ of the sensing data point on the y-axis, may be represented as z+Δr when the residual Δr is determined based on the difference between the projection distances of the reconstructed point ${P}_{2}^{′}$ and the real position (namely, the real point) P₂ of the sensing data point on the z-axis, or may be represented as R+Δr when the residual Δr is determined based on a difference between distances from the reconstructed point ${P}_{2}^{′}$ and the real position (namely, the real point) P₂ to the origin. Herein, x, y, z, and R may be respectively a coordinate of the reconstructed point ${P}_{2}^{′}$ on the x-axis (or the projection distance on the x-axis), a coordinate of the reconstructed point ${P}_{2}^{′}$ on the y-axis (or the projection distance on the y-axis), a coordinate of the reconstructed point ${P}_{2}^{′}$ on the z-axis (or the projection distance on the z-axis), and the distance from the reconstructed point ${P}_{2}^{′}$ to the origin.

Therefore, in this embodiment of this application, the first communication apparatus may further compress the residual corresponding to the sensing data point, to obtain compressed data.

It may be understood that, for a sensing geometric structure of the category 1 (corresponding to the first compression level), the first communication apparatus may not send a residual corresponding to a sensing data point to the second communication apparatus, and the second communication apparatus reconstructs the sensing data point based on position information (for example, a vertical angle θ and a horizontal angle φ) of the sensing data point and the sensing geometric structure (for example, a sensing plane) on which the sensing data point is located.

Alternatively, the first communication apparatus may send a residual compressed in a high compression ratio to the second communication apparatus, and the second communication apparatus may reconstruct the sensing data point based on the vertical angle θ, the horizontal angle φ, and ${r}_{2}^{′} + Δr$.

For a sensing geometric structure of the category 2 (corresponding to the second compression level), the first communication apparatus may send a residual compressed in a low compression ratio to the second communication apparatus, and the second communication apparatus may reconstruct a sensing data point based on a vertical angle θ, a horizontal angle φ, and ${r}_{2}^{′} + Δr$.

For a sensing geometric structure of the category 3 (corresponding to the third compression level), the first communication apparatus may send a residual compressed in a low compression ratio to the second communication apparatus, and the second communication apparatus may reconstruct a sensing data point based on a vertical angle θ, a horizontal angle φ, and ${r}_{2}^{′} + Δr$. In addition, for the sensing geometric structure of the category 3, compressed data may further include a parameter or a key data point of the sensing geometric structure. It may be understood that there may be one or more key data points of the sensing geometric structure, and the sensing geometric structure can be determined by using the key data point. The key data point may be on the sensing geometric structure, or may not be on the sensing geometric structure. This is not limited in this application. For example, the sensing geometric structure is a sensing plane. One or more sensing data points of the sensing plane (for example, three sensing data points that are not on a same straight line and that are located on the sensing plane) can be determined as key data points of the sensing plane.

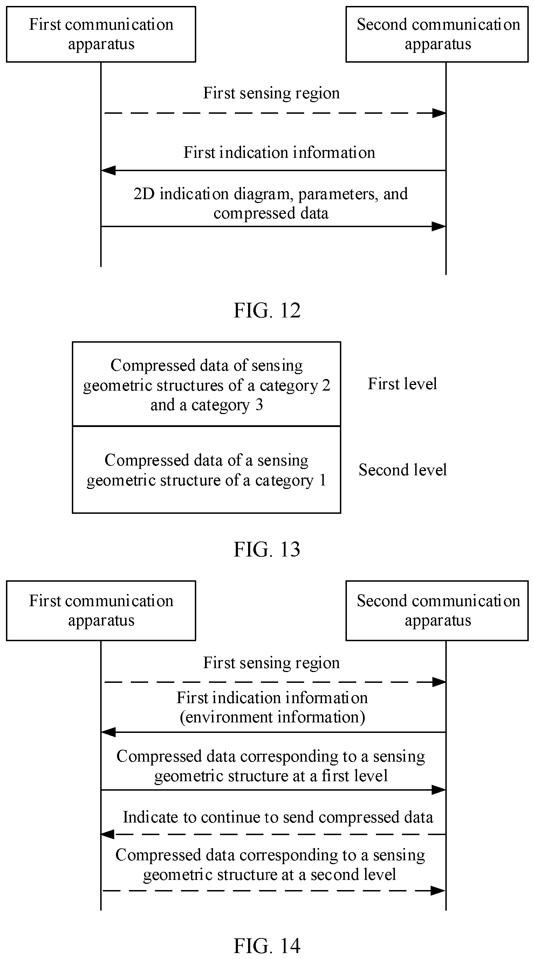

Refer to FIG. 11 and FIG. 12. For example, if a compression mode based on the position information (for example, the 2D structure position) is used, the sensing data sent by the first communication apparatus to the second communication apparatus may include the 2D indication diagram, compressed data (for example, residual compressed data) corresponding to the sensing geometric structure of the category 1 (if present), compressed data (for example, residual compressed data) corresponding to the sensing geometric structure of the category 2 (if present), and compressed data (for example, residual compressed data) corresponding to the sensing geometric structure of the category 3 (if present), and may further include compression parameters of the category 1, the category 2, and the category 3, for example, the first compression level, the second compression level, and the third compression level.

In some implementations, if there are a plurality of sensing geometric structures in the first sensing region, the first communication apparatus may further classify the plurality of sensing geometric structures into at least two levels based on at least one of information such as whether the sensing geometric structures match the environmental geometric structure, whether sensing data points corresponding to the sensing geometric structures match the scanned region on the environmental geometric structure, the sensing data point density of the scanned region on the environmental geometric structure, and the sensing data point quantity of the scanned region on the environmental geometric structure, and transmit compressed data at levels.

For example, based on whether the sensing geometric structures match the environmental geometric structure, the sensing geometric structure that does not match the environmental geometric structure may be classified into a first level (L1), and the sensing geometric structure that matches the environmental geometric structure may be classified into a second level. A transmission priority of compressed data at the first level is higher than a transmission priority of compressed data at the second level.

Refer to FIG. 13. For example, the sensing geometric structure of the category 1 (the sensing geometric structure matches the environmental geometric structure, and the sensing data point corresponding to the sensing geometric structure matches the scanned region on the environmental geometric structure) may be classified into the second level, and the sensing geometric structure of the category 2 (the sensing geometric structure matches the environmental geometric structure, and the sensing data point corresponding to the sensing geometric structure does not match the scanned region on the environmental geometric structure) and the sensing geometric structure of the category 3 (the sensing geometric structure does not match the environmental geometric structure) may be classified into the first level. A transmission priority of compressed data at the first level is higher than a transmission priority of compressed data at the second level. The first communication apparatus sequentially sends, based on the transmission priorities, the compressed data corresponding to the sensing geometric structures at all the levels.

It may be understood that classifying the plurality of sensing geometric structures into the first level and the second level based on whether the sensing geometric structures match the environmental geometric structure is merely an example. For example, based on whether the sensing geometric structures match the environmental geometric structure and whether the sensing data points corresponding to the sensing geometric structures match the scanned region on the environmental geometric structure, the sensing geometric structure of the category 1 may alternatively be classified into a third level, the sensing geometric structure of the category 2 may alternatively be classified into the second level, and the sensing geometric structure of the category 3 may alternatively be classified into the first level, where a transmission priority of compressed data at the first level is higher than a transmission priority of compressed data at the second level, and the transmission priority of the compressed data at the second level is higher than a transmission priority of compressed data at the third level.

FIG. 14 is a diagram of a sensing data feedback method. After the second communication apparatus sends the first indication information to the first communication apparatus, to indicate one or more pieces of environment information in the parameter of the environmental geometric structure in the first sensing region, the scanned region on the environmental geometric structure, the sensing data point density of the scanned region on the environmental geometric structure, the sensing data point quantity of the scanned region on the environmental geometric structure, and the like, the first communication apparatus may first send, to the second communication apparatus, compressed data corresponding to the sensing geometric structure at the first level, and send, based on an indication of the second communication apparatus, subsequent compressed data corresponding to the sensing geometric structure at the second level, compressed data corresponding to the sensing geometric structure at the third level, and the like. For example, the first communication apparatus sends, to the second communication apparatus, the compressed data corresponding to the sensing geometric structure at the first level, and if the first communication apparatus receives fifth indication information (or signaling) that is from the second communication apparatus and that indicates to continue to send the compressed data, the first communication apparatus may send, to the second communication apparatus, the compressed data corresponding to the sensing geometric structure at the second level. If the first communication apparatus sends, to the second communication apparatus, the compressed data corresponding to the sensing geometric structure at the second level, and further receives indication information (or signaling) that indicates to continue to send the compressed data, the first communication apparatus may send, to the second communication apparatus, the compressed data corresponding to the sensing geometric structure at the third level.

In some implementations, when sending the compressed data corresponding to the sensing geometric structure to the second communication apparatus, the first communication apparatus may further send a corresponding compression parameter, for example, the compression level, and reconstruction performance based on the compressed data corresponding to the sensing geometric structure (for example, an error, for example, a mean square error, between the sensing data point reconstructed based on the compressed data and a real sensing data point), so that the second communication apparatus restores the compressed data corresponding to the sensing geometric structure, and obtains the reconstruction performance of the compressed data corresponding to the sensing geometric structure. For example, when reconstruction performance at a level does not satisfy a performance threshold, the second communication apparatus may indicate the first communication apparatus to continue to send compressed data corresponding to a sensing geometric structure at a next level, and may further indicate a reconstruction performance requirement, so that the first communication apparatus adjusts the compression parameter like the compression level based on the reconstruction performance requirement.

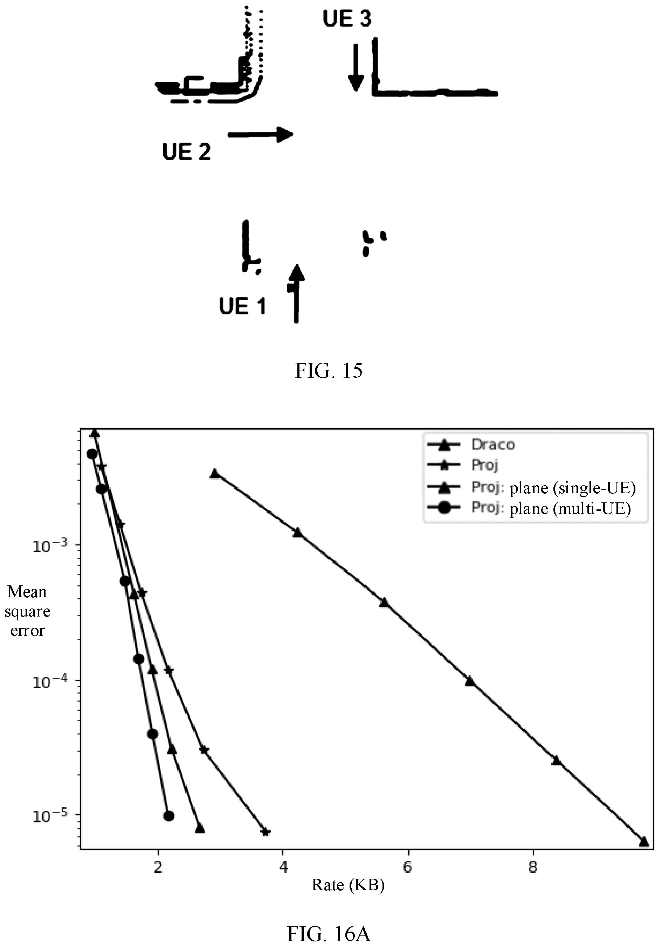

According to the sensing data feedback method provided in this application, the data transmission amount can be effectively reduced. FIG. 15 is a diagram of a simulation configuration. There are three first communication apparatuses (three UEs are used as examples in FIG. 15). Each first communication apparatus has a field of view of 120 degrees and a sampling interval of 1 frame/s. The first communication apparatuses alternately exchange with the second communication apparatus (for example, a base station). There is a total of 24 frames of sensing data. The first communication apparatuses are at a speed of 5 m/s. A sensing data feedback solution for simulation includes the following.

Draco solution: A quantization bit quantity is 8 to 16.

Projection (projection, Proj) solution: a 2D diagram+a distance sequence+an LZMA

Proj plane (plane) (single-first communication apparatus, for example, single-UE (single-UE)) solution: The first communication apparatus extracts a plane, and sends a plane parameter and plane compressed data to the second communication apparatus, where a quantization bit quantity is 8 to 16.

Proj plane (multi-first communication apparatus, for example, multi-UE (multi-UE)) solution: 8 to 16 quantization bits corresponding to high compression levels (for example, the second compression level and the third compression level), and 7 to 15 quantization bits (high compression level-1) corresponding to a low compression level.

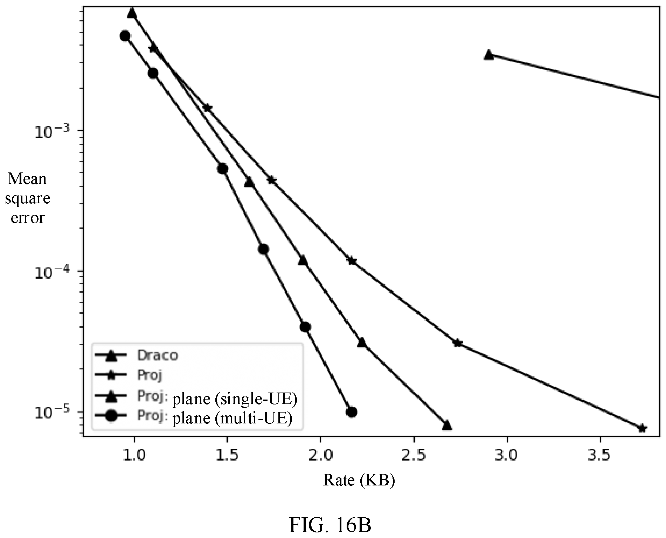

FIG. 16A and FIG. 16B (a partial enlargement in FIG. 16A) are diagrams of a simulation structure. A horizontal axis represents a rate (rate), and a vertical axis represents a mean square error (mean square error, MSE). It can be learned that, when only a sensing data point on a plane is compressed, the sensing data feedback solution (Proj plane (multi-UE)) provided in this embodiment of this application can be applied, to effectively reduce the data transmission amount and improve compression performance.

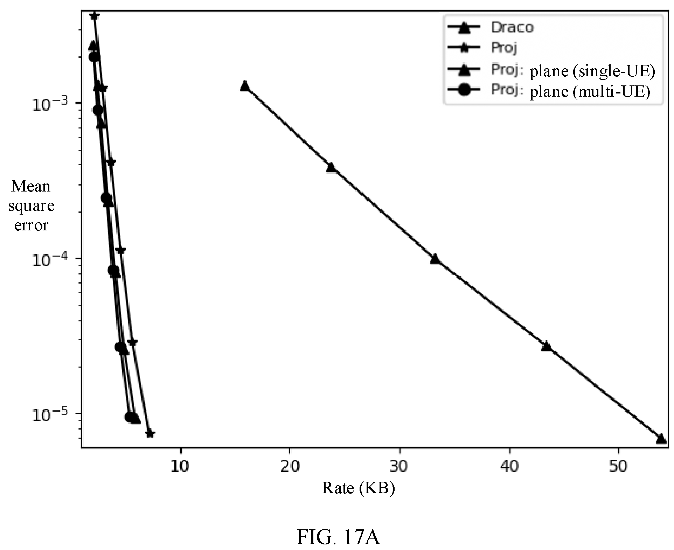

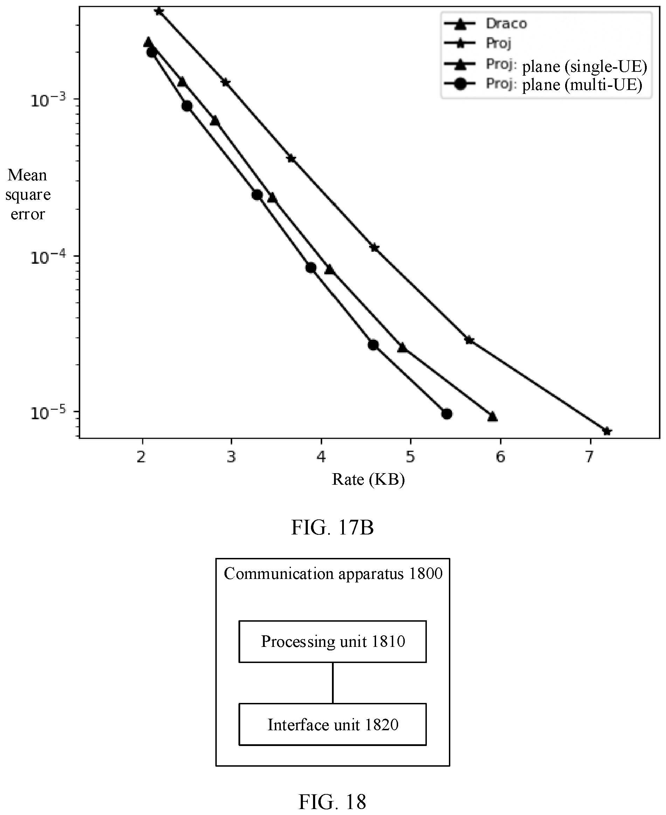

FIG. 17A and FIG. 17B (a partial enlargement in FIG. 17A) are diagrams of a simulation structure. A horizontal axis represents a rate (rate), and a vertical axis represents a mean square error (MSE). It can be learned that, when all sensing data points (including a sensing data point that does not belong to a plane) are compressed, the sensing data feedback solution (Proj plane (multi-UE)) provided in this embodiment of this application can be applied, to effectively reduce the data transmission amount and improve compression performance.

The following describes communication apparatuses provided in embodiments of this application. FIG. 18 is a diagram of a structure of a communication apparatus according to an embodiment of this application. The communication apparatus may include units or modules corresponding to all or a part of the steps in the foregoing method embodiments, and may be configured to perform the steps performed by the first communication apparatus or the second communication apparatus in the foregoing embodiments. For details, refer to related descriptions in the foregoing method embodiments.

As shown in FIG. 18, the communication apparatus 1800 includes a processing unit 1810 and an interface unit 1820. The processing unit 1810 may be a processor or a processing circuit. The interface unit 1820 may be a transceiver unit or an input/output interface. The communication apparatus 1800 may be configured to implement the steps performed by the first communication apparatus or the second communication apparatus in the foregoing embodiments.

When the communication apparatus 1800 is configured to implement the steps performed by the first communication apparatus in the foregoing embodiments,
the interface unit 1820 is configured to receive first indication information from the second communication apparatus, where the first indication information indicates an environmental geometric structure in a first sensing region and a scanned region on the environmental geometric structure;
the processing unit 1810 is configured to compress, based on the first indication information, a sensing data point corresponding to a sensing geometric structure in the first sensing region, to obtain compressed data, where a compression mode or a compression level of the sensing data point is determined based on at least one of whether the sensing geometric structure matches the environmental geometric structure or whether the sensing data point matches the scanned region on the environmental geometric structure; and
the interface unit 1820 is further configured to send the compressed data to the second communication apparatus.

In a possible design, if the sensing geometric structure matches the environmental geometric structure and the sensing data point matches the scanned region on the environmental geometric structure, the compression level is a first compression level; if the sensing geometric structure matches the environmental geometric structure and the sensing data point does not match the scanned region on the environmental geometric structure, the compression level is a second compression level; and if the sensing geometric structure does not match the environmental geometric structure, the compression level is a third compression level, where the first compression level is greater than the second compression level, and the second compression level is greater than or equal to the third compression level.

For example, that the first compression level is greater than the second compression level and the second compression level is greater than or equal to the third compression level may be as follows: A quantization bit quantity corresponding to the first compression level is less than a quantization bit quantity corresponding to the second compression level, and the quantization bit quantity corresponding to the second compression level is less than or equal to a quantization bit quantity corresponding to the third compression level.

In a possible design, if the sensing geometric structure matches the environmental geometric structure and the sensing data point matches the scanned region on the environmental geometric structure, the compression mode is a first compression mode; if the sensing geometric structure matches the environmental geometric structure and the sensing data point does not match the scanned region on the environmental geometric structure, the compression mode is a second compression mode; and if the sensing geometric structure does not match the environmental geometric structure, the compression mode is a third compression mode.

In a possible design, the first indication information further indicates a sensing data point density of the scanned region on the environmental geometric structure and/or a sensing data point quantity of the scanned region on the environmental geometric structure; and the compression mode or the compression level is determined based on at least one of whether the sensing geometric structure matches the environmental geometric structure, whether the sensing data point matches the scanned region on the environmental geometric structure, the sensing data point density of the scanned region on the environmental geometric structure, or the sensing data point quantity of the scanned region on the environmental geometric structure.

In a possible design, the environmental geometric structure is an environmental plane, the sensing geometric structure is a sensing plane, the sensing plane corresponds to a plurality of sensing data points, and when compressing, based on the first indication information, the sensing data point corresponding to the sensing geometric structure in the first sensing region, to obtain the compressed data, the processing unit 1810 is specifically configured to generate second indication information, where the second indication information indicates position information of the plurality of sensing data points and the sensing plane on which the plurality of sensing data points are located, and position information of any sensing data point is determined based on two-dimensional data in three-dimensional data of the sensing data point.

In a possible design, the processing unit 1810 is further configured to: determine, based on three-dimensional data of the plurality of sensing data points and three-dimensional data of a plurality of reconstructed points corresponding to the plurality of sensing data points, residuals corresponding to the plurality of sensing data points, where the three-dimensional data of the plurality of reconstructed points is determined based on the position information of the plurality of sensing data points and the sensing plane; and compress, based on the compression mode or the compression level, the residuals corresponding to the plurality of sensing data points, to obtain compressed data.

In a possible design, if the sensing geometric structure does not match the environmental geometric structure, the compressed data further includes a parameter or a key data point of the sensing geometric structure, and the key data point is used to determine the sensing geometric structure.

In a possible design, whether the sensing geometric structure matches the environmental geometric structure is determined based on whether a distance between the sensing geometric structure and the environmental geometric structure is less than or equal to a distance threshold.

In a possible design, the interface unit 1820 is further configured to receive third indication information from the second communication apparatus, where the third indication information indicates at least one of the first compression level, the second compression level, or the third compression level.

In a possible design, the interface unit 1820 is further configured to receive fourth indication information from the second communication apparatus, where the fourth indication information indicates at least one of the first compression mode, the second compression mode, or the third compression mode.

In a possible design, there are a plurality of sensing geometric structures in the first sensing region, and before the interface unit 1820 sends the compressed data to the second communication apparatus, the processing unit 1810 is further configured to classify the plurality of sensing geometric structures into at least two levels based on at least one of whether each of the plurality of sensing geometric structures matches the environmental geometric structure or whether a sensing data point corresponding to the sensing geometric structure matches the scanned region on the environmental geometric structure, where the at least two levels include a first level and a second level, and a transmission priority of compressed data at the first level is higher than a transmission priority of compressed data at the second level.

In a possible design, before sending, to the second communication apparatus, compressed data corresponding to a sensing geometric structure at the second level in the plurality of sensing geometric structures, the interface unit 1820 is further configured to determine that fifth indication information from the second communication apparatus is received, where the fifth indication information indicates to continue to transmit the compressed data.

In a possible design, the first indication information further indicates the sensing data point density of the scanned region on the environmental geometric structure and/or the sensing data point quantity of the scanned region on the environmental geometric structure; and when classifying the plurality of sensing geometric structures into the at least two levels based on at least one of whether each of the plurality of sensing geometric structures matches the environmental geometric structure or whether the sensing data point corresponding to the sensing geometric structure matches the scanned region on the environmental geometric structure, the processing unit 1810 is specifically configured to classify the plurality of sensing geometric structures into the at least two levels based on at least one of whether each of the plurality of sensing geometric structures matches the environmental geometric structure, whether the sensing data point corresponding to the sensing geometric structure matches the scanned region on the environmental geometric structure, the sensing data point density of the scanned region on the environmental geometric structure, or the sensing data point quantity of the scanned region on the environmental geometric structure.

When the communication apparatus 1800 is configured to implement the steps performed by the second communication apparatus in the foregoing embodiments,
the processing unit 1810 is configured to determine first indication information, where the first indication information indicates an environmental geometric structure in a first sensing region and a scanned region on the environmental geometric structure; and
the interface unit 1820 is configured to: send the first indication information to the first communication apparatus, and receive compressed data from the first communication apparatus, where a compression mode or a compression level corresponding to the compressed data is determined based on at least one of whether a sensing geometric structure corresponding to the compressed data matches the environmental geometric structure or whether a sensing data point corresponding to the sensing geometric structure matches the scanned region on the environmental geometric structure.

In a possible design, if the sensing geometric structure matches the environmental geometric structure and the sensing data point matches the scanned region on the environmental geometric structure, the compression level is a first compression level; if the sensing geometric structure matches the environmental geometric structure and the sensing data point does not match the scanned region on the environmental geometric structure, the compression level is a second compression level; and if the sensing geometric structure does not match the environmental geometric structure, the compression level is a third compression level, where the first compression level is greater than the second compression level, and the second compression level is greater than or equal to the third compression level.

For example, that the first compression level is greater than the second compression level and the second compression level is greater than or equal to the third compression level may be as follows: A quantization bit quantity corresponding to the first compression level is less than a quantization bit quantity corresponding to the second compression level, and the quantization bit quantity corresponding to the second compression level is less than or equal to a quantization bit quantity corresponding to the third compression level.

In a possible design, if the sensing geometric structure matches the environmental geometric structure and the sensing data point matches the scanned region on the environmental geometric structure, the compression mode is a first compression mode; if the sensing geometric structure matches the environmental geometric structure and the sensing data point does not match the scanned region on the environmental geometric structure, the compression mode is a second compression mode; and if the sensing geometric structure does not match the environmental geometric structure, the compression mode is a third compression mode.

In a possible design, the environmental geometric structure is an environmental plane, the sensing geometric structure is a sensing plane, the sensing plane corresponds to a plurality of sensing data points, the compressed data further includes second indication information, the second indication information indicates position information of the plurality of sensing data points and the sensing plane on which the plurality of sensing data points are located, and position information of any sensing data point is determined based on two-dimensional data in three-dimensional data of the sensing data point.

In a possible design, if the sensing geometric structure does not match the environmental geometric structure, the compressed data further includes a parameter or a key data point of the sensing geometric structure.

In a possible design, the interface unit 1820 is further configured to send third indication information to the first communication apparatus, where the third indication information indicates at least one of the first compression level, the second compression level, or the third compression level.

In a possible design, the interface unit 1820 is further configured to send fourth indication information to the first communication apparatus, where the fourth indication information indicates at least one of the first compression mode, the second compression mode, or the third compression mode.

In a possible design, there are a plurality of sensing geometric structures in the first sensing region, and when receiving the compressed data from the first communication apparatus the interface unit 1820 is specifically configured to: receive compressed data at a first level from the first communication apparatus, where the compressed data at the first level includes compressed data corresponding to a sensing geometric structure at the first level in the plurality of sensing geometric structures; and receive compressed data at a second level from the first communication apparatus, where the compressed data at the second level includes compressed data corresponding to a sensing geometric structure at the second level in the plurality of sensing geometric structures, the plurality of sensing geometric structures are classified into at least two levels by the first communication apparatus, and the at least two levels include the first level and the second level.

In a possible design, before receiving the compressed data at the second level from the first communication apparatus, the interface unit 1820 is further configured to send fifth indication information to the first communication apparatus, where the fifth indication information indicates to continue to transmit the compressed data.

In a possible design, the first indication information further indicates a sensing data point density of the scanned region on the environmental geometric structure and/or a sensing data point quantity of the scanned region on the environmental geometric structure.

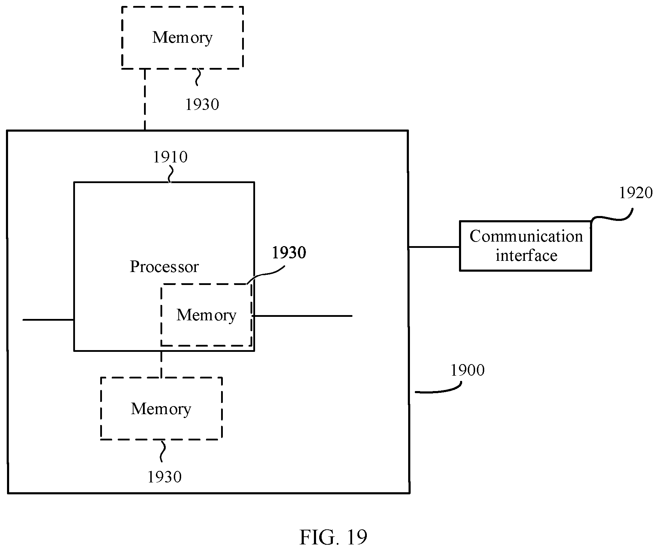

As shown in FIG. 19, this application further provides a communication apparatus 1900, including a processor 1910 and further including a communication interface 1920. The processor 1910 and the communication interface 1920 are coupled to each other. It may be understood that the communication interface 1920 may be a transceiver, an input/output interface, an input interface, an output interface, an interface circuit, or the like. Optionally, the communication apparatus 1900 may further include a memory 1930, configured to store instructions to be executed by the processor 1910, store input data required by the processor 1910 to run the instructions, or store data generated after the processor 1910 runs the instructions. The memory 1930 may be a physically independent unit, or may be coupled to the processor 1910, or the processor 1910 includes the memory 1930.

When the communication apparatus 1900 is configured to implement the steps performed by the first communication apparatus and the second communication apparatus in the foregoing embodiments, the processor 1910 may be configured to implement the functions of the processing unit 1810, and the communication interface 1920 may be configured to implement the functions of the interface unit 1820.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

The foregoing embodiments may be all or partially implemented by software, hardware, firmware, or any combination thereof. When being implemented by the software, the foregoing embodiments may be all or partially implemented in a form of a computer program product. The computer program product includes one or more computer programs or instructions. When the computer program or the instructions are loaded and executed on a computer, the procedure or functions according to embodiments of this application are all or partially generated. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a network device, terminal, computer, server, or data center to another network device, terminal, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is intended to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sensing data feedback method, applied to a first communication apparatus, and comprising:
receiving first indication information from a second communication apparatus, wherein the first indication information indicates an environmental geometric structure in a first sensing region and a scanned region on the environmental geometric structure;
compressing, based on the first indication information, a sensing data point corresponding to a sensing geometric structure in the first sensing region, to obtain compressed data, wherein a compression mode or a compression level of the sensing data point is determined based on at least one of whether the sensing geometric structure matches the environmental geometric structure or whether the sensing data point matches the scanned region on the environmental geometric structure; and
sending the compressed data to the second communication apparatus.

2. The method according to claim 1, wherein if the sensing geometric structure matches the environmental geometric structure and the sensing data point matches the scanned region on the environmental geometric structure, the compression level is a first compression level;
if the sensing geometric structure matches the environmental geometric structure and the sensing data point does not match the scanned region on the environmental geometric structure, the compression level is a second compression level; and
if the sensing geometric structure does not match the environmental geometric structure, the compression level is a third compression level, wherein
the first compression level is greater than the second compression level, and the second compression level is greater than or equal to the third compression level.

3. The method according to claim 1, wherein if the sensing geometric structure matches the environmental geometric structure and the sensing data point matches the scanned region on the environmental geometric structure, the compression mode is a first compression mode;
if the sensing geometric structure matches the environmental geometric structure and the sensing data point does not match the scanned region on the environmental geometric structure, the compression mode is a second compression mode; and
if the sensing geometric structure does not match the environmental geometric structure, the compression mode is a third compression mode.

4. The method according to any one of claims 1 to 3, wherein the first indication information further indicates a sensing data point density of the scanned region on the environmental geometric structure and/or a sensing data point quantity of the scanned region on the environmental geometric structure; and
the compression mode or the compression level is determined based on at least one of whether the sensing geometric structure matches the environmental geometric structure, whether the sensing data point matches the scanned region on the environmental geometric structure, the sensing data point density of the scanned region on the environmental geometric structure, or the sensing data point quantity of the scanned region on the environmental geometric structure.

5. The method according to any one of claims 1 to 4, wherein the environmental geometric structure is an environmental plane, the sensing geometric structure is a sensing plane, the sensing plane corresponds to a plurality of sensing data points, and compressing, based on the first indication information, the sensing data point corresponding to the sensing geometric structure in the first sensing region, to obtain the compressed data comprises:
generating second indication information, wherein the second indication information indicates position information of the plurality of sensing data points and the sensing plane on which the plurality of sensing data points are located, and position information of any sensing data point is determined based on two-dimensional data in three-dimensional data of the sensing data point.

6. The method according to claim 5, wherein the method further comprises:
determining, based on three-dimensional data of the plurality of sensing data points and three-dimensional data of a plurality of reconstructed points corresponding to the plurality of sensing data points, residuals corresponding to the plurality of sensing data points, wherein the three-dimensional data of the plurality of reconstructed points corresponding to the plurality of sensing data points is determined based on the position information of the plurality of sensing data points and the sensing plane; and
compressing, based on the compression mode or the compression level, the residuals corresponding to the plurality of sensing data points, to obtain compressed data.

7. The method according to any one of claims 1 to 6, wherein if the sensing geometric structure does not match the environmental geometric structure, the compressed data further comprises a parameter or a key data point of the sensing geometric structure, and the key data point is used to determine the sensing geometric structure.

8. The method according to any one of claims 1 to 7, wherein whether the sensing geometric structure matches the environmental geometric structure is determined based on whether a distance between the sensing geometric structure and the environmental geometric structure is less than or equal to a distance threshold.

9. The method according to claim 2, wherein the method further comprises:
receiving third indication information from the second communication apparatus, wherein the third indication information indicates at least one of the first compression level, the second compression level, or the third compression level.

10. The method according to claim 3, wherein the method further comprises:
receiving fourth indication information from the second communication apparatus, wherein the fourth indication information indicates at least one of the first compression mode, the second compression mode, or the third compression mode.

11. The method according to any one of claims 1 to 10, wherein there are a plurality of sensing geometric structures in the first sensing region, and before sending the compressed data to the second communication apparatus, the method further comprises:
classifying the plurality of sensing geometric structures into at least two levels based on at least one of whether each of the plurality of sensing geometric structures matches the environmental geometric structure or whether a sensing data point corresponding to the sensing geometric structure matches the scanned region on the environmental geometric structure, wherein the at least two levels comprise a first level and a second level, and a transmission priority of compressed data at the first level is higher than a transmission priority of compressed data at the second level.

12. The method according to claim 11, wherein before compressed data corresponding to a sensing geometric structure at the second level in the plurality of sensing geometric structures is sent to the second communication apparatus, the method further comprises:
determining that fifth indication information from the second communication apparatus is received, wherein the fifth indication information indicates to continue to transmit the compressed data.

13. The method according to claim 11 or 12, wherein the first indication information further indicates the sensing data point density of the scanned region on the environmental geometric structure and/or the sensing data point quantity of the scanned region on the environmental geometric structure; and
classifying the plurality of sensing geometric structures into the at least two levels based on at least one of whether each of the plurality of sensing geometric structures matches the environmental geometric structure or whether the sensing data point corresponding to the sensing geometric structure matches the scanned region on the environmental geometric structure comprises:
classifying the plurality of sensing geometric structures into the at least two levels based on at least one of whether each of the plurality of sensing geometric structures matches the environmental geometric structure, whether the sensing data point corresponding to the sensing geometric structure matches the scanned region on the environmental geometric structure, the sensing data point density of the scanned region on the environmental geometric structure, or the sensing data point quantity of the scanned region on the environmental geometric structure.

14. A sensing data feedback method, applied to a second communication apparatus, and comprising:
sending first indication information to a first communication apparatus, wherein the first indication information indicates an environmental geometric structure in a first sensing region and a scanned region on the environmental geometric structure; and
receiving compressed data from the first communication apparatus, wherein a compression mode or a compression level corresponding to the compressed data is determined based on at least one of whether a sensing geometric structure corresponding to the compressed data matches the environmental geometric structure or whether a sensing data point corresponding to the sensing geometric structure matches the scanned region on the environmental geometric structure.

15. The method according to claim 14, wherein if the sensing geometric structure matches the environmental geometric structure and the sensing data point matches the scanned region on the environmental geometric structure, the compression level is a first compression level;
if the sensing geometric structure matches the environmental geometric structure and the sensing data point does not match the scanned region on the environmental geometric structure, the compression level is a second compression level; and
if the sensing geometric structure does not match the environmental geometric structure, the compression level is a third compression level, wherein
the first compression level is greater than the second compression level, and the second compression level is greater than or equal to the third compression level.

16. The method according to claim 14, wherein if the sensing geometric structure matches the environmental geometric structure and the sensing data point matches the scanned region on the environmental geometric structure, the compression mode is a first compression mode;
if the sensing geometric structure matches the environmental geometric structure and the sensing data point does not match the scanned region on the environmental geometric structure, the compression mode is a second compression mode; and
if the sensing geometric structure does not match the environmental geometric structure, the compression mode is a third compression mode.

17. The method according to any one of claims 14 to 16, wherein the environmental geometric structure is an environmental plane, the sensing geometric structure is a sensing plane, the sensing plane corresponds to a plurality of sensing data points, the compressed data comprises second indication information, the second indication information indicates position information of the plurality of sensing data points and the sensing plane on which the plurality of sensing data points are located, and position information of any sensing data point is determined based on two-dimensional data in three-dimensional data of the sensing data point.

18. The method according to claim 17, wherein the compressed data is determined by compressing, based on the compression mode or the compression level, residuals corresponding to the plurality of sensing data points, wherein the residuals corresponding to the plurality of sensing data points are determined based on three-dimensional data of the plurality of sensing data points and three-dimensional data of a plurality of reconstructed points corresponding to the plurality of sensing data points, and three-dimensional data of a reconstructed point corresponding to any sensing data point is determined based on position information of the sensing data point and the sensing plane.

19. The method according to any one of claims 14 to 18, wherein if the sensing geometric structure does not match the environmental geometric structure, the compressed data further comprises a parameter or a key data point of the sensing geometric structure, and the key data point is used to determine the sensing geometric structure.

20. The method according to claim 15, wherein the method further comprises:
sending third indication information to the first communication apparatus, wherein the third indication information indicates at least one of the first compression level, the second compression level, or the third compression level.

21. The method according to claim 16, wherein the method further comprises:
sending fourth indication information to the first communication apparatus, wherein the fourth indication information indicates at least one of the first compression mode, the second compression mode, or the third compression mode.

22. The method according to any one of claims 14 to 21, wherein there are a plurality of sensing geometric structures in the first sensing region, and receiving the compressed data from the first communication apparatus comprises:
receiving compressed data at a first level from the first communication apparatus, wherein the compressed data at the first level comprises compressed data corresponding to a sensing geometric structure at the first level in the plurality of sensing geometric structures; and
receiving compressed data at a second level from the first communication apparatus, wherein the compressed data at the second level comprises compressed data corresponding to a sensing geometric structure at the second level in the plurality of sensing geometric structures, wherein
the plurality of sensing geometric structures are classified into at least two levels by the first communication apparatus, and the at least two levels comprise the first level and the second level.

23. The method according to claim 22, wherein before receiving the compressed data at the second level from the first communication apparatus, the method further comprises:
sending fifth indication information to the first communication apparatus, wherein the fifth indication information indicates to continue to transmit the compressed data.

24. The method according to any one of claims 14 to 23, wherein the first indication information further indicates a sensing data point density of the scanned region on the environmental geometric structure and/or a sensing data point quantity of the scanned region on the environmental geometric structure.

25. A communication apparatus, comprising a module or a unit configured to perform the method according to any one of claims 1 to 24.

26. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 24 through a logic circuit or by executing instructions.

27. A computer program product, comprising a computer program or instructions, wherein when the computer program or the instructions are executed by a processor, the method according to any one of claims 1 to 24 is implemented.

28. A chip system, wherein the chip system comprises a processor, the processor is configured to be coupled to a memory, the memory is configured to store a computer program or instructions, and when the computer program or the instructions are executed by the processor, the method according to any one of claims 1 to 24 is implemented.

29. A computer-readable storage medium, wherein the storage medium stores a computer program or instructions, and when the computer program or the instructions are executed by a processor, the method according to any one of claims 1 to 24 is implemented.30. A communication system, wherein the communication system comprises a first communication apparatus and a second communication apparatus;
the first communication apparatus is configured to implement the method according to any one of claims 1 to 13; and
the second communication apparatus is configured to implement the method according to any one of claims 14 to 24.
